# EUROPÄISCHE PATENTSCHRIFT

(11) **EP 0 799 811 B1**
(45) Veröffentlichungstag und Bekanntmachung des Hinweises auf die Patenterteilung: **05.01.2000**
(21) Anmeldenummer: 97104341.9
(22) Anmeldetag: 14.03.1997
(51) Int. Cl.: C05F 9/00, C05F 17/00, C02F 3/28

(54) **Verfahren zur Hausmüllbehandlung**
Method for treating household waste
Procédé de traitement de déchets ménagers

(30) Priorität: 03.04.1996 DE 19613373
(43) Veröffentlichungstag der Anmeldung: 08.10.1997
(73) Patentinhaber: Lurgi Entsorgung GmbH, 60439 Frankfurt (DE)
(72) Erfinder: Götte, Meinolf, 40878 Ratingen (DE); Böddeker, Hans-Joachim, 48157 Münster (DE); Vollmer, Friedel Dipl.-Ing., 44652 Herne (DE)
(74) Vertreter: Vomberg, Friedhelm, Dipl.-Phys.

(56) Entgegenhaltungen:
- EP-A- 0 078 919
- WO-A-88/04282
- DE-A- 3 015 239
- DE-A- 3 442 403
- DE-A- 19 516 378

## Beschreibung

Die Erfindung betrifft ein Verfahren zur Hausmüllbehandlung durch Absieben einer Feinfraktion, etwaige Zerkleinerung der Restfraktion auf Partikelgrößen ≤ 180 mm, die z.B. einer Müllverbrennung zugeführt werden, wobei aus der Feinfraktion und der Restfraktion durch Magnetabscheidung ferritische Bestandteile aus den Fraktionen entfernt werden.

Zur Aufbereitung und thermischen Verwertung von Haus- bzw. Restmüll, Grobmüll und hausmüllähnlichem Gewerbemüll ist es nach dem Stand der Technik bekannt, zunächst eine Klassifizierung in einzelne Fraktionen vorzunehmen, was durch Zerkleinern und Sieben geschehen kann. Die heizwertreiche, von der Feinfraktion ≤ 40 mm befreite Restfraktion mit einer Partikelgröße bis zu 180 mm wird verbrannt, wobei die Verbrennungswärme nutzbar gemacht werden kann. Etwaige im Hausmüll (oder hausmüllähnlichen Mischungen) enthaltene magnetische Stoffe können durch Magnetabscheider entfernt und der Stahlindustrie zurückgeführt werden.

Die Feinfraktion, die neben Sand, Steinen, Glasanteilen auch Flüssigkeit, insbesondere nativ-organisches Material enthält, konnte bisher unmittelbar zur Deponierung bzw. zur Aufschüttung von Halden etc. verwendet werden. Ständig knapper werdender Deponieraum und schärfere Umweltschutzauflagen (z.B. T.D. Siedlungsabfall) führen dazu, daß die Entsorgung der Feinanteile kostspielig , bzw. ohne weitere Behandlung nicht mehr zulässig ist. Ein Verfahrensansatz ist, daß aus der Feinfraktion Inertstoffe ausgewaschen und damit entfernt werden. Diese Inertstoffe bestehen im wesentlichen aus Sand, Steinen und Glasbestandteilen. Sie sind als Mineralstoffe zur Weg- und Untergrundbefestigung gefahrlos verwertbar. Zurück bleibt ein organisch hochbelastetes, schwermetallhaltiges Abwasser, das aufgrund seiner Schadstoffkonzentration ein erhebliches Entsorgungsproblem bildet.

DE 30 15 239 A1 behandelt ein Verfahren zur Erzeugung von Biogas unter Verwendung von Hausmüll und kommunalem Klärschlamm, die gemeinsam mit Hilfe eines mehrstufigen Mahlvorganges zerkleinert und gemischt werden, wonach die dabei entstehenden Schlämme einer mehrstündigen Quellzeit unterworfen werden, woran anschließend alle nicht verrottbaren Anteile durch einen oder mehrere Flotationsvorgänge ausgeschieden werden und der Feststoffanteil der verbleibenden Schlämme durch mechanische Entwässerung auf ca. 40 % erhöht wird. Die entwässerte Schlämme wird einem anaeroben Faulprozeß bei Temperaturen von ca. 30 bis 35°C unterworfen und bei Erreichen der maximalen Abgabe von brennbarem Biogas abgebrochen und daran anschließend durch einen gesteuerten Rotteprozeß hygienisiert und humifiziert.

Es ist Aufgabe der vorliegenden Erfindung, ein Verfahren anzugeben, mit dem dieses Abwasser so auf Vorfluterqualität gereinigt wird, daß die organische Belastung entsprechend abgebaut und die Schwermetalle als Konzentrat für eine Entsorgung anfallen.

Diese Aufgabe wird durch das Verfahren nach Anspruch 1 gelöst, das erfindungsgemäß dadurch gekennzeichnet ist, daß, nachdem aus der Feinfraktion Inertstoffe ausgewaschen und entfernt worden sind, die von den Inertstoffen befreite Phase einer anaeroben Behandlung unterzogen wird, bei der durch Hydrolyse und saure Gärung die in der Phase enthaltenen Metalle, insbesondere Schwermetalle, aus (im wesentlichen organischen) Komplexverbindungen gelöst und in eine weitgehend ionisierte wasserlösliche Form überführt werden, daß die wässrige, die Schwermetalle in gelöster Form enthaltende Phase von dem Restschlamm abgetrennt und die Schwermetalle ausgefällt werden und daß der Restschlamm einer Methanisierung zugeführt wird, wonach der verbleibende Gärschlamm kompostiert wird.

Der Vorteil des erfindungsgemäßen Verfahrens im Hinblick auf die Weiterbehandlung der Feinfraktion liegt darin, daß der verbleibende Gärschlamm als schadstoffbefreite Substanz ohne Umweltbelastung zu Humus abbaubar ist,daß ein Teil der organischen Substanz zu Biogas umgesetzt wird, so daß einzig die ausgefällten Salze, einschließlich der Schwermetallsalze, einer Entsorgung bedürfen.

Berücksichtigt man, daß der angelieferte Hausmüll oder die hausmüllähnlichen Abfälle zu 40 % eine absiebbare Feinfraktion im Bereich ≤ 70 mm aufweist, die bisher entsorgt werden mußte, aber künftig als Deponieabdeckmaterial aufgrund des hohen organischen Gehaltes von deutlich über 5 % nicht mehr verwandt werden darf, so kann unter Anwendung des erfindungsgemäßen Verfahrens die letztendlich als Sondermüll zu entsorgende Restmenge (Schwermetalle etc.) auf deutlich unter 5 % minimiert werden. Darüber hinaus kann durch den nachgeschalteten Gärungsprozeß Biogas (CH₄) gewonnen werden, das aufgrund seines Heizwertes nutzbar gemacht wird. Der einer Hydrolyse und sauren Gärung sowie der Methanisierung zugeführte Schlamm wird schließlich auf einen biologisch inaktivierten und damit stabilisierten Gärschlamm abgebaut. Mit der Methanisierung können gleichzeitig dioxin- und furanhaltige Stoffe abgebaut werden.

Die Behandlung von organisch belasteten Schlämmen durch Hydrolyse und saure Gärung unter Luftabschluß bzw. die zweistufige Behandlung mit abschließender Methanbildung ist zwar grundsätzlich nach dem Stand der Technik bekannt (vgl. EP 0 085 421 B1 und EP 0 335 825 B1), jedoch wurde dieses Verfahren bisher nur zur Behandlung von Gülle, in der Landwirtschaft entstehende Faulschlämmen oder Klärschlämmen verwendet. Grundsätzlich sind aufgrund derselben Prozeßführung die in den genannten EP-Patentschriften beschriebenen Vorrichtungen verwendbar.

Weiterbildungen der Erfindung sind in den Unteransprüchen beschrieben.

Nachdem aus der Feinfraktion Feststoffe, wie Sand, Steine und Glas, sedimentiert und aufschwimmfähige Feststoffe, wie Papier und Kunststoff, abgeschöpft worden sind, wodurch die ursprüngliche Feinfraktion von den Inertstoffen befreit wird, die ≥ 8 mm sind, wird die zurückbleibende wässrige Schlammlösung nach einer der Erfindung der Hydrolyse und sauren Gärung bei einem pH-Wert < 6,5 und vorzugsweise bei Temperaturen zwischen 55°C bis 65°C durchgeführt. Die pH-Wert-Einstellung ist erforderlich, um insbesondere Schwermetalle aus den organischen gelösten Komplexverbindungen zu befreien und in eine ionisierte wasserlösliche Form zu überführen, aus der z.B. durch Zugabe von Fällungsmitteln Schwefelsäure, Blei, Cadmium oder andere Metalle ausgefällt werden können und um gleichzeitig den Mikroorganismen optimale Lebensbedingungen zu schaffen. Die Temperatureinstellung dient zum einen dazu, die Löslichkeit zu erhöhen, zum anderen, um eine Hygienisierung sicherzustellen. Die wässrige Phase der Hydrolyse- und sauren Gärungsstufe kann diskontinuierlich oder kontinuierlich dekantiert werden und z.B. hiernach mit Fällungsmittel versetzt werden, nach deren Zugabe das metallsalz- und sonstige tonbestandteilhaltige Substrat ausgefällt und nach Filtration und Trocknung erhalten wird.

Der in die Methanisierung überführte Restschlamm, der von Inertstoffen sowie organischen gelösten Stoffen und Schwermetallen etc. befreit ist, wird durch Frischwasserzugabe bzw. Laugenzugabe auf einen pH-Wert von mindestens 6,5, vorzugsweise 7 bis maximal 7,5, angehoben. Das bei der Methanisierung entstehende Gasgemisch enthält im wesentlichen CH₄, CO₂ und H₂, die als Gase abgeführt werden.

Nach einer Weiterbildung der Erfindung wird das nach der Fällung erhaltene gereinigte Wasser zum Anmaischen der Feinfraktion und/oder als Frischwasser dem Restschlamm vor der Methanisierung zugeführt.

Das aus der Methanisierungsstufe sich über dem Gärschlamm bildende Wasser wird vorzugsweise dekantiert und dem Restschlamm, der in die Methanisierungsstufe eingegeben wird, zugegeben.

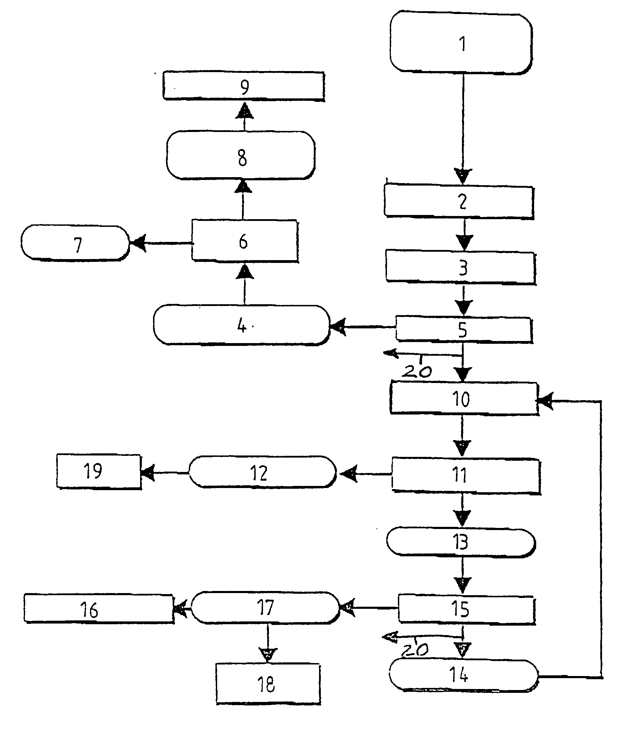

Die erfindungsgemäße Verfahrensführung wird anhand der Zeichnung beispielhaft im folgenden erläutert.

Nachdem aus der Hausmüllfraktion die Inertstoffe, nämlich Steine, Sand, Glas, als Sediment einerseits und aufschwimmfähige Feststoffe, wie Papier, Kunststoff etc., andererseits durch Waschen abgetrennt worden sind, führt die verbleibende wässrige Lösung 1 nunmehr nur noch Partikel (Schwebstoff-teilchen < 8 mm) sowie gelöste Substanzen mit sich. Sie wird nach einer Konditionierung 2 in eine erste Stufe 3 überführt, wo eine Hydrolyse und saure Gärung bei pH-Werten unter 6,5 durchgeführt wird. Das aus dieser Stufe 3 abgeführte, die noch gelösten Schwermetalle, organischen Stoffe etc. enthaltende Wasser 4 wird z.B. durch Dekantieren 5 einer Fällung 6 unter Zugabe von Fällungsmittel unterzogen, woraus das Schadstoffkondensatz 7 einerseits sowie das gereinigte Wasser 8 andererseits abziehbar sind. Das Wasser 8 wird entweder einer Waschstufe 9 und/oder dem Restschlamm zugegeben, der aus der Hydrolysestufe 3 als Sediment abgezogen wird und der nach geeigneter Konditionierung 10 einer Methanisierung 11 zugeführt wird. Die hierbei entstehenden Gase 12, im wesentlichen CH₄, CO₂ und H₂ einerseits, der verbleibende Gärschlamm 13 andererseits und das Restwasser 14, das durch Dekantieren 15 abgeschöpft wird, sind die aus dieser Stufe erhaltenen Produkte, wobei das Restwasser 14, wie dargestellt, zurückgeführt wird. Der Gärschlamm 13 ist von Inertstoffen, organischen und Schwermetall-Schadstoffen bereit und kann einer Kompostierung 16 durch Zuführung der daraus erhaltenen Feststoffe 17 unterzogen werden, soweit diese nicht einer Satabilisierung und Ablagerung unterzogen werden. Aus dem Biogas 12 kann Energie 19 gewonnen werden.

Ein im wesentlichen aus feinen Tonmineralien, etwa verbliebenen organischen Substanzen und Wasser bestehender Schlamm kann als Teilstrom 20 nach dem Dekantieren 5 oder nach dem Dekantieren 15 abgezogen und als Roh- bzw. Zuschlagstoff für die Ziegelherstellung verwendet werden.

## Patentansprüche

1. Verfahren zur Hausmüllbehandlung durch Absieben einer Feinfraktion, etwaige Zerkleinerung der Restfraktion auf Partikelgrößen ≤ 180 mm, die z.B. einer Müllverbrennung zugeführt werden, wobei aus der Feinfraktion und der Restfraktion durch Magnetabscheidung ferritische Bestandteile aus den Fraktionen entfernt werden und aus der Feinfraktion Inertstoffe ausgewaschen und entfernt werden, wobei die von den Inertstoffen befreite Phase einer anaeroben Behandlung unterzogen wird, bei der die enthaltenen Schwermetalle entfernt und die Phase einer Methanisierung, einer Entwässerung sowie schließlich einer Kompostierung zugeführt wird,
**dadurch gekennzeichnet,**
daß durch Hydrolyse und saure Gärung (3) die in der Phase enthaltenen Metalle, insbesondere Schwermetalle aus organischen Komplexverbindungen gelöst und in eine weitgehend ionisierte wasserlösliche Form überführt werden, daß die wässrige, die Schwermetalle in gelöster Form enthaltene Phase (4) von dem Restschlamm abgetrennt und die Schwermetalle (6) ausgefällt werden und daß der Restschlamm einer Methanisierung (11) zugeführt wird, wonach der verbleibende Gärschlamm (13) kompostiert wird.

2. Verfahren nach Anspruch 1, dadurch gekennzeichnet, daß die Hydrolyse und saure Gärung (3) bei einem pH-Wert ≤ 6,5 durchgeführt werden.

3. Verfahren nach Anspruch 1 oder 2, dadurch gekennzeichnet, daß die Hydrolyse und saure Gärung (3) bei Temperaturen zwischen 55°C bis 65°C durchgeführt werden.

4. Verfahren nach einem der Ansprüche 1 oder 3, dadurch gekennzeichnet, daß die wässrige Phase der Hydrolyse und sauren Gärungsstufe (3) dekantiert und durch Zugabe von Fällungsmitteln (Säuren), wie Ionenaustauschern, (Harzen) oder dergleichen ausgefällt und das Kondensat als Schadstoff (7) abgezogen wird.

5. Verfahren nach einem der Ansprüche 1 bis 4, dadurch gekennzeichnet, daß der in die Methanisierung (11) überführte Restschlamm auf einen pH-Wert von ≥ 6,5, vorzugsweise 7,0 bis maximal 7,5 eingestellt wird.

6. Verfahren nach einem der Ansprüche 1 bis 5, dadurch gekennzeichnet, daß das nach der Fällung erhaltene Wasser (8) zum Anmaischen der Feinfraktion und/oder dem Restschlamm vor der Methanisierung (11) zugeführt wird.

7. Verfahren nach einem der Ansprüche lbis 5, dadurch gekennzeichnet, daß das aus der Methanisierungsstufe (11) sich über dem Gärschlamm bildende Wasser dekantiert und dem Restschlamm zugeführt wird.

8. Verfahren nach einer der Ansprüche 1-7, dadurch gekennzeichnet, daß die Feinfraktion Partikelgrößen ≤ 70 mm enthält.

9. Verfahren nach einem der Ansprüche 1 bis 8, dadurch gekennzeichnet, daß nach dem Dekantieren (5, 15) ein aus im wesentlichen feinen Tonmineralien, verbliebenen organischen Substanzen und Wasser bestehender Schlamm als Teilstrom (20) abgezogen und als Roh- bzw. Zuschlagstoff für die Ziegelherstellung verwendet wird.

## Claims

1. Method for treating household waste by sieving a fine grain fraction, optionally shredding the residue fraction into a particle size ≤ 180 mm and - for example - bringing this fraction to an incineration, whereby ferrite materials are removed from the fine grain fraction and from the residue fraction by magnetic separation and inert substances are washed out and removed from the fine fraction, whereby the phase set free from the inert substances is led to an anaerobical treatment for removing the heavy metals and for methanisation, dewatering and finally composting said phase,
**characterised in that**
the metals, especially the heavy metals, contained in said phase are dissociated from organic complex compounds by hydrolysis and acid fermentation and led into an essentially ionized water-soluble form, that the aqueous phase (4) containing the heavy metals in dissolved form is separated from the residue sludge and that the heavy metals (6) are precipitated and that the residue sludge is led to a methanisation (11) after which the residual fermentation sludge (13) is composted.

2. Method according to claim 1, characterised in that the hydrolysis and acid fermentation (3) is accomplished at a ph-value ≤ 6,5.

3. Method according to claim 1 or 2, characterised in that the hydrolysis and acid fermentation (3) is accomplished at temperatures between 55°C and 65°C.

4. Method according to one of the claims 1 to 3, characterised in that the aqueous phase of the hydrolysis and acid fermentation step (3) is decanted and separated by addition of precipitants (acids) as ion exchangers (resins) or the like and the condensate as toxic agent is removed.

5. Method according to one of the claims 1 to 4, characterised in that the residue sludge transferred in the methanisation is set to a ph-value ≥ 6,5, preferably 7,0 to maximally 7,5.

6. Method according to one of claims 1 to 5, characterised in that the water (8) received after precipitation is transferred to the fine fraction for pulping and/or to the residue sludge before the methanisation (11).

7. Method according to one of the claims 1 to 5, characterised in that the water in the methanisation step (11) being above the fermentation sludge is decanted and transferred to the residue sludge.

8. Method of one of the claims 1 to 7, characterised in that the fine fraction contains particle sizes ≤ 70 mm.

9. Method of one of the claims 1 to 8, characterised in that after decantation (5, 15) a sludge essentially comprising fine clay minerals, remained organic substances and water is removed as a partial flow (20) and is used as raw material respectively additive in processes for the production of bricks.

## Revendications

1. Procédé de traitement de déchets ménagers par tamisage d'une fraction fine, par un eventuel broyage de la fraction résiduelle à des grosseurs de particules ≤ 180 mm, qui est amenée, par exemple, à une incinération de déchets ménagers, des composants ferritiques étant enlevés de la fraction fine et de la fraction résiduelle par une séparation magnétique et des substances inertes étant enlevées par lavage de la fraction fine, la phase libérée des substances inertes étant soumise à un traitement anaérobie durant lequel les métaux lourds contenus sont enlevés et la phase est amenée à une méthanisation, à un enlèvement d'eau ainsi que, enfin, à un compostage,
**caractérisé par le fait**
que les métaux, en particulier les métaux lourds, contenus dans la phase sont dissociés de composés complexes organiques par hydrolyse et fermentation acide et sont transformés en une forme soluble dans l'eau, dans une large mesure ionisée, que la phase aqueuse (4) contenant les métaux lourds en forme dissoute est séparée de la boue résiduelle et que les métaux lourds (6) sont précipités et que la boue résiduelle est amenée à une méthanisation (11) après laquelle la boue restante de fermentation (13) est compostée.

2. Procédé selon la revendication 1, caractérisé par le fait que l'hydrolyse et la fermentation acide (3) sont effectuées à une valeur pH ≤ 6,5.

3. Procédé selon la revendication 1 ou 2, caractérisé par le fait que l'hydrolyse et la fermentation acide (3) sont effectuées à des températures comprises entre 55°C et 65°C.

4. Procédé selon l'une des revendications 1 ou 3, caractérisé par le fait que la phase aqueuse de l'étape de l'hydrolyse et de fermentation acide (3) est décantée et précipitée en ajoutant des précipitants (acides) tels qu'échangeurs d'ions (résines) ou semblable, et que le condensat est évacué en tant que substance nocive (7).

5. Procédé selon l'une des revendications 1 à 4, caractérisé par le fait que la boue résiduelle qui est amenée à la méthanisation (11) est réglée à une valeur pH ≥ 6,5, de préférence à une valeur pH comprise entre 7,0 et 7,5 au maximum.

6. Procédé selon l'une des revendications 1 à 5, caractérisé par le fait que l'eau (8) obtenue après la précipitation est amenée pour tremper la fraction fine et/ou à la boue résiduelle avant la méthanisation (11).

7. Procédé selon l'une des revendications 1 à 5, caractérisé par le fait que l'eau venant de l'étape de méthanisation (11) et se formant sur la boue de fermentation est décantée et amenée à la boue résiduelle.

8. Procédé selon l'une des revendications 1 à 7, caractérisé par le fait que la fraction fine contient des grosseurs de particules ≤ 70 mm.

9. Procédé selon l'une des revendications 1 à 8, caractérisé par le fait que, après le décantage (5, 15), une boue se composant de minéraux d'argile pour l'essentiel fins, de substances organiques restantes et d'eau est évacuée en tant que courant partiel (20) et est utilisée en tant que matière brute ou bien additif pour la fabrication de briques.
